# EUROPEAN PATENT APPLICATION

(11) **EP 3 407 674 A1**
(43) Date of publication of application: **28.11.2018**
(21) Application number: 17741395.2
(22) Date of filing: 18.01.2017
(51) Int. Cl.: H04W 88/08, H04W 28/04

(54) **WIRELESS BASE STATION AND COMMUNICATIONS CONTROL METHOD**

(30) Priority: 22.01.2016 JP 2016011089
(71) Applicant: NTT DOCOMO, INC., Chiyoda-ku Tokyo 100-6150 (JP)
(72) Inventor: OOKUBO, Naoto, Tokyo 100-6150 (JP); KIYOSHIMA, Kohei, Tokyo 100-6150 (JP); UMESH, Anil, Tokyo 100-6150 (JP); UCHINO, Tooru, Tokyo 100-6150 (JP); TAKEDA, Kazuki, Tokyo 1006150 (JP)
(74) Representative: Hoffmann Eitle
(86) International application number: PCT/JP2017/001461
(87) International publication number: WO 2017/126518

(57) **Abstract**

An object is to realize appropriate HARQ retransmission of the downlink signals even when the function of the upper layer such as the MAC scheduler and the function of the radio physical layer are mounted separately. A radio base station (200) includes a central aggregation device (210) and a remote device (220), and performs radio communication with a user device (300) . The remote device (220) includes a receiving unit (223) that receives from the user device (300) a reception response signal that notifies whether a downlink signal is successfully received or not; a generating unit (224) that generates, based on the reception response signal, delivery confirmation information necessary for the central aggregation device (210) to perform retransmission control of the downlink signal; and a transmitting unit (225) that transmits to the central aggregation device (210) the delivery confirmation information. The delivery confirmation information contains information that indicates whether the reception is successful or not contained in the reception response signal.

## Description

### TECHNICAL FIELD

The present invention relates to a radio base station that includes a remote device and a central aggregation device and that performs radio communication with a user device, and a communication control method.

### BACKGROUND ART

3rd Generation Partnership Project (3GPP) specifies Long Term Evolution (LTE), and with the aim of further speeding, specifies LTE-Advanced (hereinbelow, the LTE includes the LTE-Advanced). Moreover, in the 3GPP, specification of succeeding systems of the LTE called 5G (5th generation mobile communication system) and the like is being considered.

So-called C-RAN radio base station that includes a central aggregation device having a scheduler function (MAC scheduler) in MAC layer and the like, and a remote device that is positioned away from the installation location of the central aggregation device is prescribed in the LTE. The remote device includes a radio unit (RF unit) such as PA (Power Amplifier) / LNA (Low Noise Amplifier), a radio transmission - reception module, and a modulation - demodulation module.

The central aggregation device and the remote device are connected to each other via a wired transmission path called a front-haul. For example, Common Public Radio Interface (CPRI) is known as an interface between the central aggregation device and the remote device.

In the discussion related to the 5G specifications, the radio physical layer (layer 1) function that is typically implemented in the central aggregation device is proposed to be implemented in the remote device (for example, Non-Patent Document 1). According to such an implementation, transmission band required for the front-haul can be reduced.

### PRIOR ART DOCUMENT

### NON-PATENT DOCUMENT

[Non-Patent Document 1]: 3GPP RWS-150051 (3GPP RAN workshop on 5G), "5G Vision for 2020 and Beyond", 3GPP, September 2015

### SUMMARY OF THE INVENTION

As explained above, the following issues arise when the radio physical layer function that is conventionally mounted in the central aggregation device is mounted in the remote device. That is, the upper layer (layer 2 and the like) function such as the MAC scheduler is mounted in the central aggregation device in a manner same as the conventional manner. Therefore, for example, to perform an appropriate HARQ (Hybrid Automatic Repeat reQuest) retransmission control of a downlink signal, the MAC scheduler must be linked to the radio physical layer that detects the reception response signal (ACK, NACK) transmitted from the user device (also referred to as a radio communication terminal or a mobile station).

However, if the function of the upper layer such as the MAC scheduler is mounted in the central aggregation device in the same manner as before and the function of the radio physical layer is mounted separately in the remote device, the cooperation between the radio physical layer and the upper layer of the radio physical layer becomes difficult.

The present invention has been made in view of the above circumstances. It is an object of the present invention to provide a radio base station and a communication control method capable of realizing an appropriate HARQ retransmission control of a downlink signal even when the function of the upper layer such as the MAC scheduler and the function of the radio physical layer are mounted separately.

A radio base station according to one aspect of the present invention includes a central aggregation device and a remote device, and performs radio communication with a user device. The remote device includes a receiving unit that receives from the user device a reception response signal that notifies whether a downlink signal is successfully received or not; a generating unit that generates, based on the reception response signal, delivery confirmation information necessary for the central aggregation device to perform retransmission control of the downlink signal; and a transmitting unit that transmits the delivery confirmation information to the central aggregation device, wherein the delivery confirmation information contains information that indicates whether the reception is successful or not contained in the reception response signal.

A communication control method according to another aspect of the present invention is implemented in a radio base station that comprises a central aggregation device and a remote device, and performs radio communication with a user device. The communication control method includes receiving, by the remote device, from the user device a reception response signal that notifies whether a downlink signal is successfully received or not; generating, by the remote device, based on the reception response signal, delivery confirmation information necessary for the central aggregation device to perform retransmission control of the downlink signal; transmitting, by the remote device, to the central aggregation device the delivery confirmation information; and transmitting, by the central aggregation device, to the remote device scheduling information of the downlink signal, wherein the delivery confirmation information contains information that indicates whether the reception is successful or not contained in the reception response signal.

### BRIEF DESCRIPTION OF DRAWINGS

FIG. 1 is an overall structural diagram of a radio communication system 10.
FIG. 2 is an overall block diagram of the radio communication system 10.
FIG. 3 is a functional block diagram of a central aggregation device 210.
FIG. 4 is a functional block diagram of a remote device 220.
FIG. 5 is a diagram showing an overview of an operation of the radio communication system 10.
FIG. 6 is a sequence diagram showing an example of the operation of the radio communication system 10.
FIG. 7 is a diagram showing an example of a format of delivery confirmation information.
FIG. 8 is a diagram showing an example of a mapping table of CC and ACK / NACK.
FIG. 9 is a concreate example (Case 1) of the delivery confirmation information.
FIG. 10 is a concreate example (Case 2) of the delivery confirmation information.
FIG. 11 is a concreate example (Case 3) of the delivery confirmation information.
FIG. 12 is a concreate example (Case 4) of the delivery confirmation information.
FIG. 13 is a diagram showing a concreate example of a protocol stack that can be included in a central aggregation device and a remote device.

### MODES FOR CARRYING OUT THE INVENTION

Embodiments are explained below with reference to the accompanying drawings. In the drawings, structural elements having the same function or configuration are indicated by the same or similar reference numerals and the explanation thereof is appropriately omitted.

### (1) Overall structural configuration of radio communication system

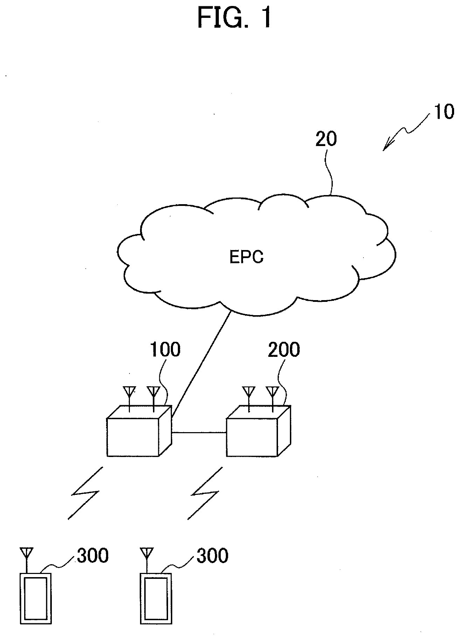

FIG. 1 is an overall structural diagram of a radio communication system 10 according to the present embodiment. The radio communication system 10 is a radio communication system in accordance with Long Term Evolution (LTE), and 5G, which is a succeeding system of the LTE.

Furthermore, in this embodiment, from the viewpoint of comparing with the 5G, the LTE (including LTE-Advanced) is appropriately referred to as "4G". Moreover, in this embodiment, a configuration of a radio communication system formulated immediately after the introduction of the 5G is assumed, and LTE assisted operation that the 5G complements the 4G is realized.

The radio communication system 10 includes a core network 20, a radio base station 100, a radio base station 200, and one or more user devices 300.

The core network 20 is also referred to as Evolved Packet Core (EPC), and is constituted by a mobility management entity (MME), a serving gateway (S-GW), PDN gateway (P-GW), and the like.

The radio base station 100 is a radio base station according to 4G, and is also referred to as eNodeB. The radio base station 100 is connected to a device (node) that constitutes the core network 20 via S1-MME or S1-U interface.

The radio base station 200 is a radio base station according to 5G. The radio base station 200 is connected to the radio base station 100 via X2 interface (for convenience, referred to as X2-AP', X2-U').

The user device 300 can perform radio communication with the radio base station 100 and the radio base station 200. The user device 300 can be referred to as a radio communication terminal or a mobile station. By controlling radio signals transmitted from a plurality of antenna elements, the radio base station 200 and the user device 300 can support technologies such as Massive MIMO that generates a beam having higher directivity, carrier aggregation (CA) that uses a plurality of component carriers (CC), and dual connectivity (DC) that simultaneously transmits the component carriers between a plurality of the radio base stations and the user device 300.

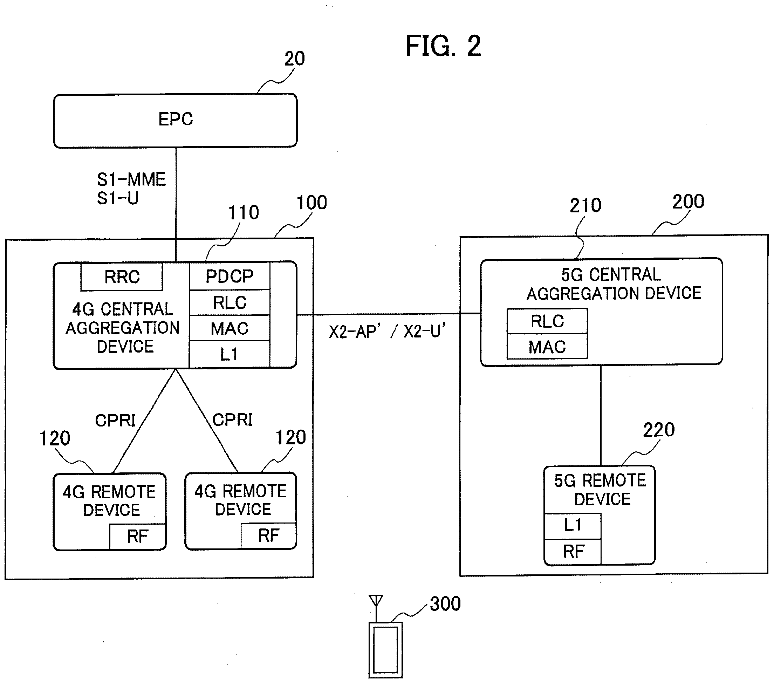

FIG. 2 is an overall block diagram of the radio communication system 10. As shown in FIG. 2, the radio base station 100 is constituted by a central aggregation device 110 and a remote device 120. Similarly, the radio base station 200 is constituted by a central aggregation device 210 and a remote device 220. Furthermore, the radio base station 100 and the radio base station 200 can include devices other than the central aggregation device and the remote device.

The central aggregation device 110 includes a radio physical layer (L1), a medium access control layer (MAC), a radio link control layer (RLC), and a packet data convergence protocol layer (PDCP). Moreover, the central aggregation device 110 includes a radio resource control layer (RRC) as an upper layer of the PDCP.

The remote device 120 can be positioned at a remote location away from the installation position of the central aggregation device 110. The remote device 120 includes a radio unit (RF) such as the PA (Power Amplifier) / LNA (Low Noise Amplifier), a radio transmission - reception module, and a modulation - demodulation module.

The central aggregation device 110 is also referred to as a digital processing unit (Digital Unit (DU)), and the remote device 120 is also referred to as a radio processing unit (Radio Unit (RU)). The central aggregation device 110 and the remote device 120 are connected to each other via a wired transmission path called front-haul. Interface such as the Common Public Radio Interface (CPRI) is used as such an interface between the central aggregation device 110 and the remote device 120.

The central aggregation device 210 and the remote device 220 respectively correspond to the central aggregation device 110 and the remote device 120 explained above, but have different layer configurations from that of the central aggregation device 110 and the remote device 120.

Specifically, the central aggregation device 210 includes the medium access control layer (MAC) and the radio link control layer (RLC). The remote device 220 includes the radio physical layer (L1) and the radio unit (RF).

Furthermore, as explained above, the central aggregation device 210 is connected to the central aggregation device 110 via X2-AP', X2-U' interface.

### (2) Functional block configuration of radio communication system

A functional block configuration of the radio communication system 10 is explained below. Specifically, functional block configurations of the central aggregation device 210 and the remote device 220 of the radio base station 200 are explained.

### (2.1) Central aggregation device 210

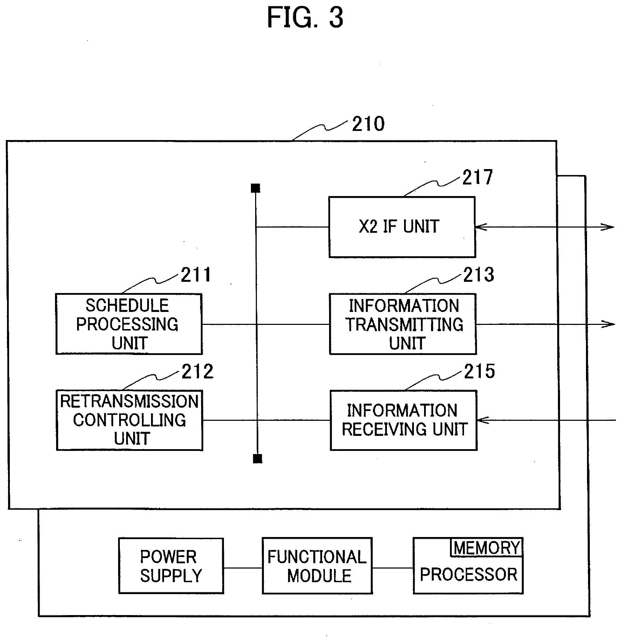

FIG. 3 is a functional block diagram of the 5G central aggregation device 210. As shown in FIG. 3, the central aggregation device 210 includes a scheduling unit 211, a retransmission controlling unit 212, an information transmitting unit 213, an information receiving unit 215, and X2 IF unit 217.

Furthermore, as shown in FIG. 3, each functional block of the central aggregation device 210 is implemented by hardware elements such as a processor (including a memory), a functional module (network IF and the like), and a power supply.

The scheduling unit 211 (MAC scheduler) executes a scheduling process that determines which radio resource is to be assigned to which user device 300. Specifically, the scheduling unit 211 generates scheduling information (assignment information of the radio resources) for the user device 300 selected in the scheduling process. The scheduling information contains, for example, number of RBs (Resource Blocks), TBS (Transport Block Size), modulation method, a transmission Rank number, and the like.

The retransmission controlling unit 212 performs HARQ (Hybrid Automatic Repeat reQuest) retransmission control of a downlink signal by using the delivery confirmation information transmitted from the remote device 220, . HARQ is a technology that uses error correction code and retransmission to compensate any error in the received signal.

The information transmitting unit 213 transmits to the remote device 220 the scheduling information necessary for the remote device 220 to transmit the downlink signal and the transmission data signal. The downlink signal is transmitted to the user device 300 by using radio resources such as PDCCH (physical Downlink Control Channel, downlink control channel) and PDSCH (physical Downlink Shared Channel, downlink shared channel). Accordingly, the scheduling information contains assignment information of the PDCCH or the PDSCH, and other related information.

The information receiving unit 215 receives the delivery confirmation information transmitted from the remote device 220, and outputs the same to the retransmission controlling unit 212.

The X2 IF unit 217 provides an interface to realize communication with the central aggregation device 110. Specifically, the X2 IF unit 217 is an interface that directly connects the central aggregation device 110 and the central aggregation device 210 by using the MAC and the RLC. It is preferable that the X2 IF unit 217 is an existing open interface. The transmission / reception data of the user device 300 is relayed to the radio base station 100 via the X2 IF unit 217.

### (2.2) Remote device 220

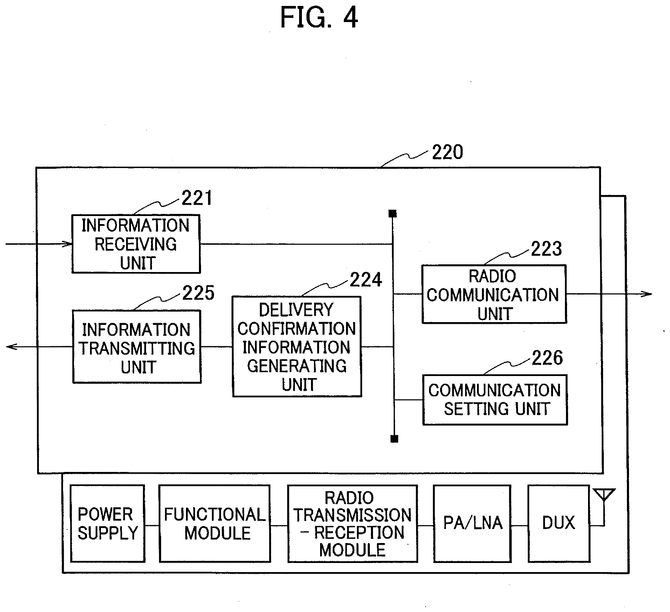

FIG. 4 is a functional block diagram of the remote device 220. As shown in FIG. 4, the remote device 220 includes an information receiving unit 221, a radio communication unit 223, a delivery confirmation information generating unit 224, an information transmitting unit 225, and a communication setting unit 226.

Furthermore, as shown in the figure, each functional block of the remote device 220 is implemented by hardware elements such as a power supply, a functional module (network IF and the like), a radio transmitter and receiver module, PA / LAN, and DUX.

The information receiving unit 221 receives from the central aggregation device 210 the scheduling information that is necessary to transmit the downlink signal and transmission data signal.

The radio communication unit 223 performs coding of the data to be transmitted by using the scheduling information received from the central aggregation device 210, executes RF (Radio Frequency) processing, and transmits the downlink signal to the user device 300 via the PDCCH or the PDSCH. Moreover, the radio communication unit 223 receives from the user device 300 a reception response signal (ACK, NACK) for the transmitted downlink signal (PDSCH signal).

The delivery confirmation information generating unit 224 generates delivery confirmation information by using the reception response signal received from the user device 300. The delivery confirmation information is explained later.

The information transmitting unit 225 transmits to the central aggregation device 210 the delivery confirmation information generated by the delivery confirmation information generating unit 224.

The communication setting unit 226 configures or sets in the remote device 220 predetermined information (for example, system parameter, UE individual setting information, and the like) so as to make the remote device 220 capable of transmitting and receiving a signal to / from the user device 300. Specifically, the communication setting unit 226 sets, by using the information notified from the central aggregation device 210, stationary information (for example, frequency, bandwidth, cell ID, and the like) at the time of cell setup. Moreover, the communication setting unit 226 sets dynamically changing information (for example, information related to notification information and the like), or settings information for individual user device, as needed.

### (3) Operation of radio communication system

Operation of the radio communication system 10 is explained below. Specifically, a process for transmission of a downlink signal executed by the radio base station 200 is explained.

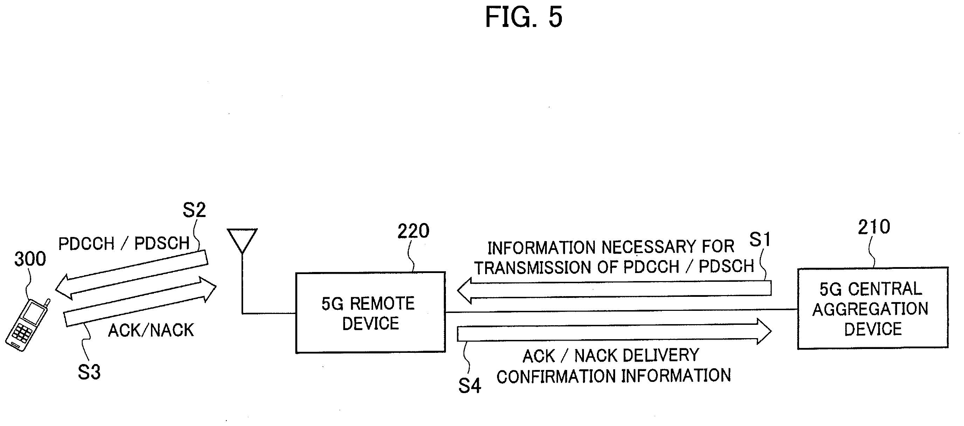

FIG. 5 is a diagram showing an overview of a process for transmission of the downlink signal executed by the central aggregation device 210 and the remote device 220.

At Step S1, the central aggregation device 210 transmits to the remote device 220 the scheduling information, which is necessary to transmit the downlink signal, and the transmission data signal. At Step S2, the remote device 220 transmits to the user device 300, by using the scheduling information, the downlink signal via the PDCCH or the PDSCH. At Step S3, the user device 300 transmits to the remote device 220 the reception response signal (ACK, NACK) for the downlink signal. At Step S4, the remote device 220 generates delivery confirmation information based on the received reception response signal, and transmits the generated delivery confirmation information to the central aggregation device 210. The central aggregation device 210 performs HARQ retransmission control of the downlink signal by using the received delivery confirmation information.

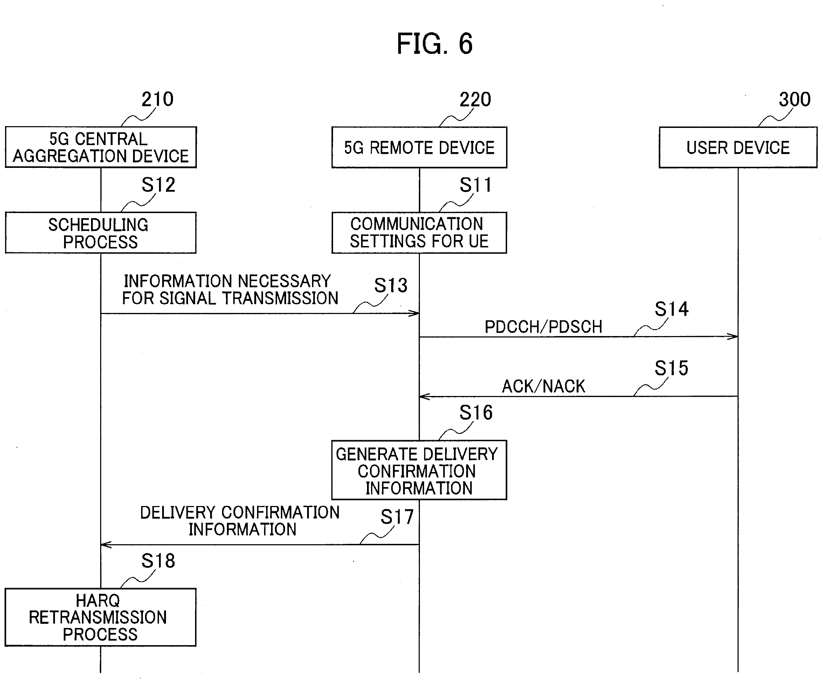

FIG. 6 is a sequence diagram that shows in detail the process for transmission of the downlink signal executed by the central aggregation device 210 and the remote device 220.

At Step S11, the remote device 220 performs communication settings for the user device 300. Specifically, the remote device 220 presets the information necessary to transmit the downlink signal to the user device 300, and the information necessary to receive the uplink signal transmitted by the user device 300.

At Step S12, the central aggregation device 210 performs scheduling (assignment) of radio resources (PDSCH, PDCCH) for the downlink signal to be transmitted to the user device 300. Next, at Step S13, the central aggregation device 210 transmits to the remote device 220 the scheduling information, which is necessary to transmit the downlink signal, and the transmission data signal.

At Step S14, the remote device 220 assigns the downlink signal to a radio resource by using the scheduling information transmitted from the central aggregation device 210, and transmits the downlink signal to the user device 300.

At Step S15, the user device 300 transmits to the remote device 220 the reception response signal (ACK or NACK (hereinafter referred to as "ACK / NACK") that notifies whether the downlink signal is successfully received or not by the user device 300. ACK (Acknowledgment) indicates that the signal transmitted at Step S14 is appropriately received. NACK (Negative Acknowledgment) indicates that the signal transmitted at Step S14 is not appropriately received. Moreover, the user device 300 does not transmit ACK or NACK if the user device 300 was unable to receive PDCCH. In this case, the remote device 220 can not detect ACK / NACK signal and may determine as DTX.

The ACK / NACK is transmitted via an uplink channel (PUSCH, PUCCH). Specifically, if the PUSCH is assigned at the transmission timing of the ACK / NACK, the user device 300 transmits the ACK / NACK via the PUSCH. When the PUSCH is used, the remote device 220 transmits to the user device 300 UL Scheduling Grant of the PUSCH as an uplink signal of the PDCCH. Accordingly, the remote device 220 knows about the reception of the uplink signal of the PUSCH (ACK / NACK reception response signal) .

On the other hand, if the PUSCH is not assigned at the transmission timing of the ACK / NACK, the user device 300 transmits the ACK / NACK via the PUCCH. When the PUCCH is used, following two situations can be considered: use the radio resources that are shared among a plurality of the user devices 300, or use the radio resources that are individually assigned to each of the user devices 300. When using the individually assigned radio resources, the central aggregation device 210 notifies in advance the remote device 220 of information related to the individual radio resources as individual settings information (parameters) of the user device 300 that transmits the downlink signal. Accordingly, at Step S11, the remote device 220 sets and retains the information related to the individual radio resources.

Moreover, the remote device 220 retains, as the information necessary to receive the ACK / NACK transmitted from the user device 300, the information necessary to transmit the PDSCH and receive the PUCCH (for example, Transmission mode, Duplex mode, Carrier aggregation state, and the like) as the settings information of the individual user device 300.

The information related to these individual radio resources or the information necessary to transmit the PDSCH and receive the PUCCH is notified from the central aggregation device 210 to the remote device 220 as setup information to be used when the user device 300 is connected, or is notified from the central aggregation device 210 to the remote device 220 when the user device 300 is notified of the change in radio resources.

When performing carrier aggregation, a plurality of the remote devices 220 may be used. Assuming a first remote device among the plurality of the remote devices 220 to be, for example, a primary remote device that transmits a signal via a primary cell (PCell) under thereof, and assuming a second remote device among the plurality of the remote devices 220 to be a secondary remote device that transmits a signal via a secondary cell (SCell) under thereof. In this case, depending on whether a signal is transmitted in the secondary cell under the second remote device (another remote device) or not, the first remote device changes own PUCCH resource, number of received bits, and the like. Accordingly, when performing carrier aggregation that uses the plurality of the remote devices 220, the central aggregation device 210 notifies the first remote device of the scheduling information (assignment information of the radio resources) under the second remote device (another remote device) at Step S13.

At Step S16, the remote device 220 generates delivery confirmation information based on the reception response signal received from the user device 300. The delivery confirmation information is the information necessary for the central aggregation device 210 to perform the HARQ retransmission control, and is the information used to transmit to the central aggregation device 210 the ACK / NACK that is transmitted from the user device 300.

The delivery confirmation information contains at least "identification information", "ACK / NACK information", and "PDSCH timing". The "ACK / NACK information" is the information in the reception response signal (ACK / NACK) that indicates whether the downlink signal is successfully received or not.

The "PDSCH timing" is PDSCH timing (for example, HFN (Hyper Frame Number), SFN (System Frame Number), sub frame number and the like) linked to the ACK / NACK information to be transmitted in the delivery confirmation information. The "PDSCH timing" can be set in a header field of the entire delivery confirmation information. Alternatively, when the ACK / NACK information of a plurality of subframes is to be collectively transmitted, the format of the "PDSCH timing" can be repeated across all the subframes. In other words, a sub-header field can be set for each subframe and the "PDSCH timing" of each subframe can be set in the sub-header field.

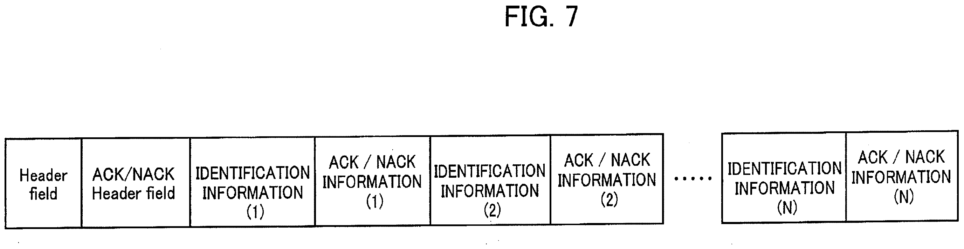

FIG. 7 is a diagram showing an example of a format of the delivery confirmation information. The delivery confirmation information shown in the figure contains a "header field", "ACK / NACK header field", "identification information", and "ACK / NACK information". Moreover, in the delivery confirmation information shown in the figure, the "identification information" and the "ACK / NACK information" are mapped and set, and a plurality of sets of the "identification information" and the "ACK / NACK information" is repeatedly set.

The "header field" is an area in which is set the information that indicates a type of the delivery confirmation information signal. In the present embodiment, the header field contains predetermined information that indicates that the delivery confirmation information is the ACK / NACK information to be used to perform HARQ retransmission control of the downlink.

The "ACK / NACK header field" is an area in which is set information that indicates a configuration of subsequent ACK / NACK information. The "ACK / NACK header field" includes the number of the identification information to be multiplexed (for example, the number of the user devices 300), bit length, and the like.

As the bit length, because the number of ACKs / NACKs differs depending on the status of each user device 300, a predetermined number of bits is specified for each user device 300. The status of the user device 300 includes, for example, the number of transmissions CWs (codewords), whether carrier aggregation is to be performed or not, multiplexing system (TDD (Time Division Duplex) / FDD (Frequency Division Duplex)), ACK bundling / multiplexing, and the like.

Moreover, the bit length information can be omitted by setting a bit field of an assumed maximum size.

Moreover, as shown in FIG. 7, total value of the bit length of each user device 300 can be set in the "ACK / NACK header field". Alternatively, a sub-header field can be set according to the ACK / NACK information of each user device 300, and bit length of each user device 300 can be set in that sub-header field. In other words, a sub-header field can be set for each "identification information", and the bit length of each user device 300 can be set in that sub-header field.

The "identification information" is the information to identify the user device 300. Specifically, it is the information that indicates to which PDSCH the subsequent corresponding ACK / NACK information corresponds. Any of the following information can be used in the identification information:
- C-RNTI (Cell-Radio Network Temporary Identity)
   (For example, SPS (Semi-Persistent Scheduling) C-RNTI and the like)
- CCE (Control Channel Element) index of the assigned PDCCH
   (If TDD is used, because the ACK / NACK must be returned by combining the information of the plurality of the subframes, the relevant last PDCCH and the like is referenced.)

Furthermore, because PDCCH does not exist when SPS is used, it is necessary to utilize PUCCH resource index and the like.
- S-TMSI (SAE-Temporary Mobile Subscriber Identity) or IMSI (International Mobile Subscriber Identity)
- Index mapped with the PDCCH information transmitted from the central aggregation device 210
   (For example, identification information specified in the transmission format of the PDCCH / PDSCH and the like. Specifically, index 1 can be assigned to a user device (1), index 2 to a user device (2), and index 3 to a user device (3).)
- PUCCH resource index
- Identification information of the radio base station implementation
   (For example, ID issued to identify in the radio base station device the user device that is connected to the radio base station and the like)

At Step S13, if a rule is applied that the delivery confirmation information in which the ACK / NACK information of each user device 300 is set shall be sent (feedback) to the central aggregation device 210 in a corresponding arrangement sequence (same arrangement sequence) as the transmission format of the PDCCH / PDSCH included in the scheduling information transmitted from the central aggregation device 210, then the "identification information" can be omitted.

As to the "identification information", if carrier aggregation and the like is to be performed, C-RNTI or CCE index and the like included in the may get duplicated in the plurality of the user devices 300. Therefore, to uniquely identify the user device 300, PCI (Physical Cell ID), ECGI (E-UTRAN Cell Global ID), a carrier frequency, a carrier number and the like can be added as the additional information in the "identification information".

Moreover, by configuring so that transmission of a part of the reception result is not needed, for example, by configuring that transmission of reception result is not needed if the reception result is ACK, and by configuring so that the identification information and the ACK / NACK information is mapped and set in the delivery confirmation information, and is transmitted only when the reception result is NACK (or DTX: no response), number of bits used in the delivery confirmation information can be reduced.

The "ACK / NACK information" is the information in the reception response signal (ACK / NACK) that indicates whether the downlink signal is successfully received or not. Specifically, the "ACK / NACK information" is information related to the delivery confirmation for the PDSCH transmitted to the user device 300, and is information related to the reception status of the reception response signal received via the PUSCH or the PUCCH.

In the "ACK / NACK information", as the information that indicates whether the reception is successful or not, for example, "ACK" or "NACK" can be used. Alternatively, a predetermined code value, index value, and the like that indicate whether the reception is successful or not can be included. Moreover, instead of using two values such as the information that indicates successful reception (for example, ACK) and the information that indicates reception failure (for example, NACK), the "ACK / NACK information" can be the information that uses three values that additionally include information that indicates no response (for example, DTX). The DTX indicates, when the PUSCH or the PUCCH transmitted from the user device 300 cannot be detected, that none of the ACK / NACK can be received, in other words, that there is no response from the user device 300.

Moreover, in the alignment sequence of the "ACK / NACK information", the information bits acquired by decoding the PUCCH or the PUSCH can be arranged as is, or can be rearranged in a specific sequence. For example, the "ACK / NACK information" can be rearranged in the order of CCE index values (ascending order / descending order).

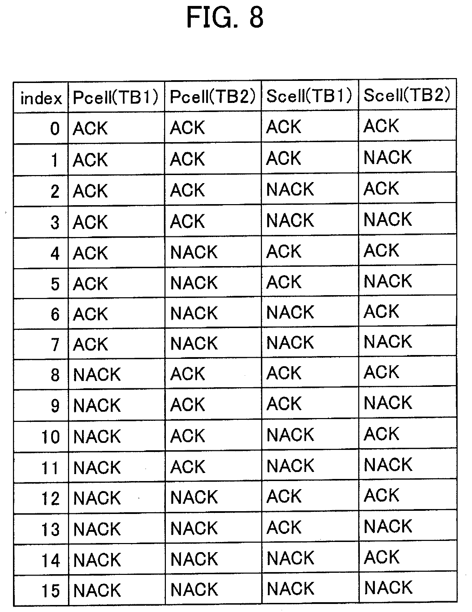

Moreover, as stipulated in channel selection of 3GPP TS 36.213, a mapping table of the CCs (Component Carrier) and the CWs (codeword) can be created in advance, and only the index thereof can be notified. That is, as shown in FIG. 8, a mapping table in which ACK / NACK pattern in each CC is set can be created, and only the corresponding index (index value) can be notified. With such a configuration, by notifying only one index value for a plurality of the CCs, the number of bits used in the delivery confirmation information can be reduced. Furthermore, in the example shown in FIG. 8, only the ACK / NACK has been used; however, the mapping table that also includes the DTX can be created.

Moreover, instead of setting all the ACKs / NACKs transmitted by the user device 300 in the "ACK / NACK information", by setting in the "ACK / NACK information" only the result in which the received the ACKs / NACKs are compiled for each specific group, the number of bits used in the delivery confirmation information can be reduced. A specific group can be formed, for example, based on all the TBs (Transport Block), the CCs, the CWs, and the like.

If a control in which the ACK / NACK is repeatedly transmitted by using the plurality of subframes (repetition control) is applied, the remote device 220 can set an invalid value or the DTX in the "ACK / NACK information" until the ACK / NACK is detected. Moreover, it is allowable that the remote device 220 does not generate and transmit the delivery confirmation information until the ACK / NACK is detected.

At Step S17, the remote device 220 transmits to the central aggregation device 210 the delivery confirmation information generated at Step S16.

At Step S18, the central aggregation device 210 receives the delivery confirmation information transmitted from the remote device 220, and performs the HARQ retransmission control of the downlink by using the received delivery confirmation information.

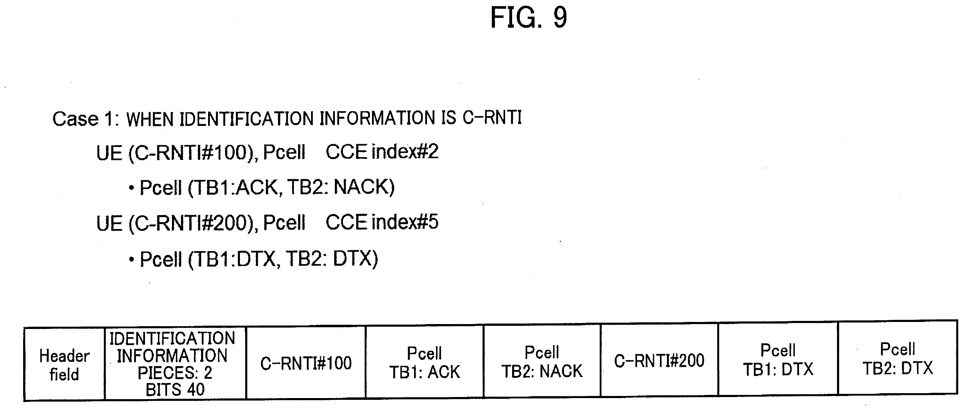

FIGS. 9 to 12 show concreate examples of the delivery confirmation information.

In the example of the delivery confirmation information (Case 1) shown in FIG. 9, C-RNTI is used as the identification information. In the delivery confirmation information shown in the figure, respective ACK / NACK information of two user devices 300 (C-RNTI #100, C-RNTI #200) is set in each TB. Furthermore, identification information and number of bits are set in the "ACK / NACK header field".

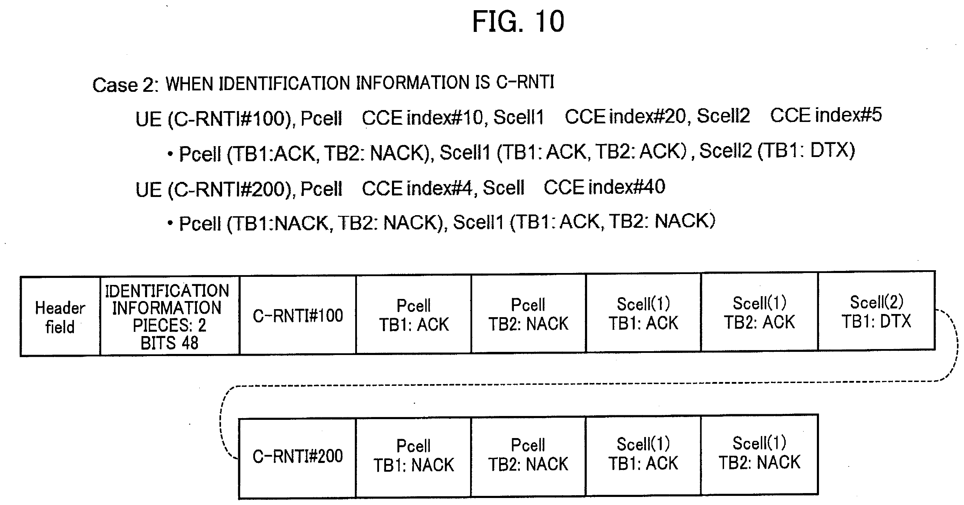

In the example of the delivery confirmation information (Case 2) shown in FIG. 10, C-RNTI is used as the identification information when performing the carrier aggregation. In the delivery confirmation information shown in the figure, respective ACK / NACK information of the two user devices 300 (C-RNTI #100, C-RNTI #200) is set in each cell (PCell, SCell1, SCell2), and each TB. The "ACK / NACK header field" is the same as that of in Case 1.

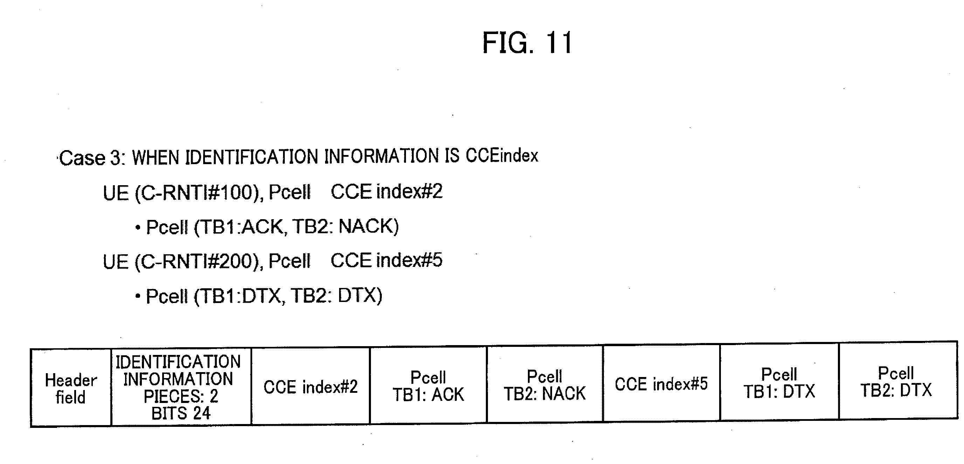

In the example of the delivery confirmation information (Case 3) shown in FIG. 11, the CCE index is used as the identification information. In the delivery confirmation information shown in the figure, the ACK / NACK information corresponding to each CCE index (CCE index #2, CCE index #5) of two user devices 300 is set in each TB. The "ACK / NACK header field" is the same as that of in Case 1.

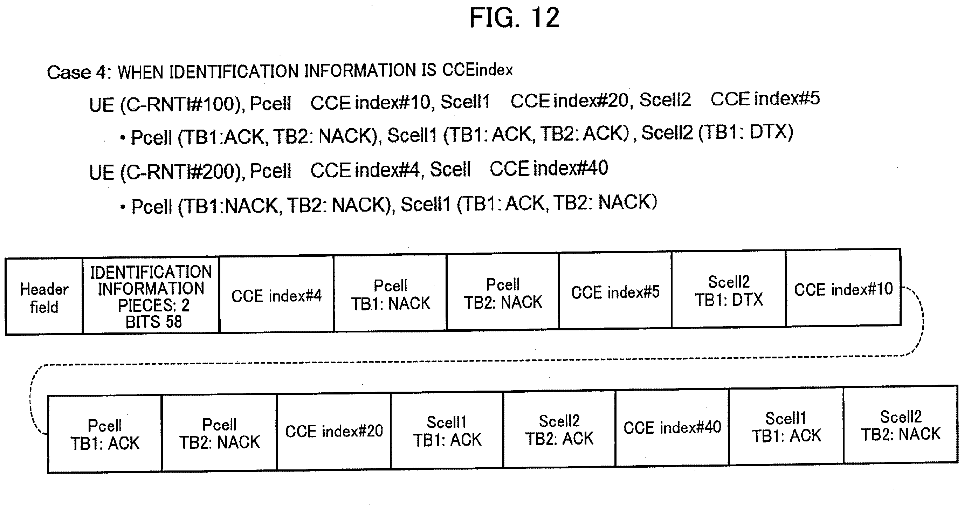

In the example of the delivery confirmation information (Case 4) shown in FIG. 12, the CCE index is used as the identification information when performing the carrier aggregation. In the delivery confirmation information shown in the figure, the ACK / NACK information of two user devices 300 is set. The ACK / NACK information for a first user device 300 (C-RNTI #100) is set for each cell (PCell (CCE index #10), SCell 1 (CCE index #20), SCell 2 (CCE index #5)), and for each TB. The ACK / NACK information for a second user device 300 (C-RNTI #200) is set for each cell (PCell (CCE index #4), SCell (CCE index #40)), and for each TB. In the example shown in the figure, a sequence of the ACK / NACK information is set as per the ascending order of the values of the CCE index. The "ACK / NACK header field" is the same as that of in Case 1.

### (4) Effects and advantages

According to the present embodiment explained above, the remote device 220 receives from the user device 300 the reception response signal (ACK / NACK signal) that notifies whether the downlink signal transmitted to the user device 300 has been successfully received or not by the user device 300; generates, based on the reception response signal, the delivery confirmation information necessary for the central aggregation device 210 to perform the HARQ retransmission control of the downlink signal; and transmits the delivery confirmation information to the central aggregation device 210. The delivery confirmation information contains the information (ACK / NACK information) that indicates whether the reception is successful or not contained in the reception response signal.

The central aggregation device 210 transmits to the remote device 220 the scheduling information necessary to transmit the downlink signal, and performs the HARQ retransmission control by using the delivery confirmation information notified from the remote device 220.

Accordingly, in the present embodiment, even when the function of the upper layer such as the MAC scheduler and the function of the radio physical layer are mounted separately, appropriate HARQ retransmission control of the downlink signal can be realized.

### Other Embodiments

The present invention has been explained in detail by using the above mentioned embodiments; however, it is self-evident to a person skilled in the art that the present invention is not limited to the embodiments explained herein and that the embodiments can be modified or improved in various ways.

For example, in the embodiment explained above, as shown in FIG. 2, even if the central aggregation device 210 includes the MAC and the RLC, and the remote device 220 includes the radio unit (RF) and the radio physical layer (L1), a protocol stack that the central aggregation device 210 and the remote device 220 must include is not necessarily limited to the format shown in FIG. 2.

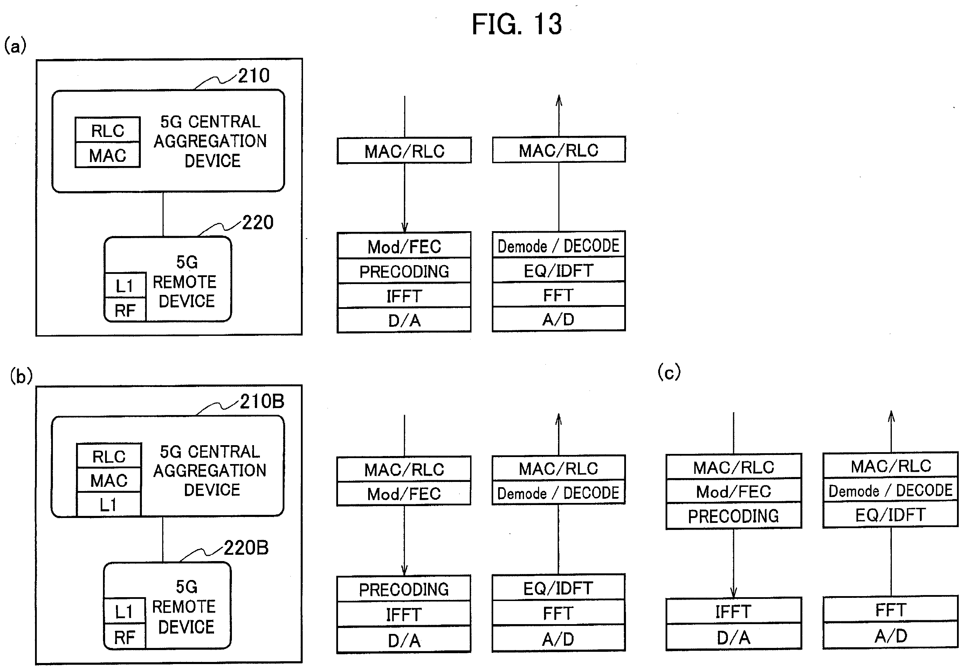

FIGS. 13(a) to 13(c) show illustrative embodiments of a protocol stack that can be included in the central aggregation device and the remote device. Specifically, FIG. 13(a) shows details of the protocol stack shown in FIG. 2.

In FIG. 13(a), the MAC and the L1 are separated. Such a separated format is referred to as MAC-PHY split. As shown in FIG. 13(a), downlink (transmitting direction) L1 includes an encoding and modulating unit (Mod / FEC), a precoding unit, IFFT unit, and D / A converting unit. Moreover, uplink (receiving direction) L1 includes A / D converting unit, FFT unit, EQ / IDFT unit, and a demodulating and decoding unit (DeMod / decoding).

On the other hand, in FIGS. 13 (b) and 13 (c), a part of the L1 functions are included in a central aggregation device 210B and the remaining functions of the same L1 are included in a remote device 220B. Such a separated format is referred to as PHY split. The present invention explained above can also be applied to such a separated format of the protocol stack.

In FIG. 2, even though the central aggregation device 210 includes only the MAC and the RLC, the central aggregation device 210 can further include the PDCP and the RRC. Moreover, in such a configuration, the central aggregation device 210 can be directly connected to the core network 20, instead of being connected via the central aggregation device 110.

Furthermore, in all the embodiments explained above, the terms defined in the 3GPP are mainly used in the explanation, but these terms can be replaced with other terms. For example, as mentioned in the embodiments explained above, the user device can be called a radio communication terminal, a mobile station, or a user terminal and the like, and the radio base station can be called a node, a radio communication device, or a system and the like.

As described above, the details of the present invention have been disclosed by using the embodiment of the present invention. However, the description and drawings which constitute part of this disclosure should not be interpreted so as to limit the present invention. From this disclosure, various alternative embodiments, examples, and operation techniques will be easily apparent to a person skilled in the art.

The entire contents of Japanese Patent Application No. 2016-011089 (filed on January 22, 2016) are incorporated in the description of the present application by reference.

### INDUSTRIAL APPLICABILITY

According to the radio base station explained above, appropriate HARQ retransmission control of the downlink signal can be realized even when the function of the upper layer such as the MAC scheduler and the function of the radio physical layer are mounted separately.

### EXPLANATION OF REFERENCE NUMERALS

- 100: radio base station
- 110: central aggregation device
- 120: remote device
- 200: radio base station
- 210: central aggregation device
- 211: schedule processing unit
- 212: retransmission control unit
- 213: information transmitting unit
- 215: information transmitting unit
- 217: X2 IF unit
- 220: remote device
- 221: information receiving unit
- 223: radio communication unit
- 224: delivery confirmation information generating unit
- 225: information transmitting unit
- 226: communication setting unit
- 300: user device

## Claims

1. A radio base station that comprises a central aggregation device and a remote device, and performs radio communication with a user device, wherein
the remote device includes
a receiving unit that receives from the user device a reception response signal that notifies whether a downlink signal is successfully received or not;
a generating unit that generates, based on the reception response signal, delivery confirmation information necessary for the central aggregation device to perform retransmission control of the downlink signal; and
a transmitting unit that transmits the delivery confirmation information to the central aggregation device, wherein
the delivery confirmation information contains information that indicates whether the reception is successful or not contained in the reception response signal.

2. The radio base station as claimed in Claim 1, wherein
the central aggregation device includes
a transmitting unit that transmits to the remote device scheduling information of the downlink signal, wherein
the transmitting unit transmits, when performing carrier aggregation by using a plurality of the remote devices, scheduling information of another remote device to a predetermined remote device.

3. A communication control method implemented in a radio base station that comprises a central aggregation device and a remote device, and performs radio communication with a user device, the communication control method comprising:
receiving, by the remote device, from the user device a reception response signal that notifies whether a downlink signal is successfully received or not;
generating, by the remote device generating, based on the reception response signal, delivery confirmation information necessary for the central aggregation device to perform retransmission control of the downlink signal;
transmitting, by the remote device, to the central aggregation device the delivery confirmation information; and
transmitting, by the central aggregation device, to the remote device scheduling information of the downlink signal, wherein
the delivery confirmation information contains information that indicates whether the reception is successful or not contained in the reception response signal.
